# EUROPÄISCHE PATENTSCHRIFT

(11) **EP 0 670 986 B1**
(45) Veröffentlichungstag und Bekanntmachung des Hinweises auf die Patenterteilung: **07.01.1999**
(21) Anmeldenummer: 94927464.1
(22) Anmeldetag: 30.09.1994
(51) Int. Cl.: F24F 13/04, F24F 6/14

(54) **MISCHVORRICHTUNG**
MIXING DEVICE
MELANGEUR

(30) Priorität: 04.10.1993 CH 2976/93
(43) Veröffentlichungstag der Anmeldung: 13.09.1995
(73) Patentinhaber: Luwa AG, CH-8047 Zürich (CH)
(72) Erfinder: Brühlmeier, Josef, CH-5430 Wettingen (CH)
(74) Vertreter: Patentanwälte Schaad, Balass, Menzl & Partner AG
(86) Internationale Anmeldenummer: CH9400194
(87) Internationale Veröffentlichungsnummer: WO9510009

(56) Entgegenhaltungen:
- EP-A- 0 251 196
- DE-B- 1 092 627

## Beschreibung

Die vorliegende Erfindung bezieht sich auf eine Mischvorrichtung bzw. einen Luftwäscher gemäss dem Oberbegriff des Anspruchs 1.

Aus dem Dokument EP-A2-0 251 196 ist ein Luftwäscher bekannt, welcher eine Düse aufweist, mit welcher eine Flüssigkeit in den Luftstrom eingedüst wird. Der Luftwäscher weist der Düse in Strömungsrichtung des Luftstromes neben und nachgeordnet eine Leitvorrichtung auf, welche auslassseitig etwa die Gestalt eines Rotationsparaboloides aufweist. Die Leitvorrichtung hat die folgende Funktion und Wirkungsweise: Die einströmende Luft tritt über einen vergleichsweise engen Querschnitt in die Leitvorrichtung ein, die sich nach aussen hin verbreitert. Nach der Kontinuitätsbedingung bedeutet dies eine Verlangsamung der Luft innerhalb der Leitvorrichtung, in der sich der Flüssigkeitsnebel befindet. Hierdurch wird bewirkt, dass die Relativgeschwindigkeit zwischen der durchströmenden Luft und der austretenden Flüssigkeit noch länger beibehalten wird, was insbesondere dem Austausch und der Aufnahme der Flüssigkeit förderlich ist. Ein Nachteil dieses bekannten Luftwäschers ist darin zu sehen, dass sich an der Oberfläche der Leitvorrichtung ständig Flüssigkeiten und Feststoffe ablagern, was zu einer Verschmutzung der Leitvorrichtung sowie zu einer Ansammlung von Mikroorganismen führt. Nebst der höchst unerwünschten Ansammlung von Mikroorganismen ist aus hygienischen Gründen ein ständiger Reinigungsaufwand erforderlich, wobei während dem Reinigen zudem der Luftwäscher abgestellt werden muss, woraus ein Betriebsunterbruch resultiert.

Es ist bekannt, in Gewächshäusern und dgl. die Luft zu befeuchten. Hierfür werden axiale Kreiselgebläse mit einer ummantelten, motorisch angetriebenen Luftschraube frei im Raum aufgehängt und die abströmende, wirbelnde Luft aus einer oder mehreren Zerstäuberdüsen mit fein zerstäubtem Wasser beaufschlagt. Die Wasseraufnahme durch die Luft ist dabei vergleichsweise gering, was eine entsprechend grosse Wasserzufuhr (Pumpenleistung, Antriebsenergie) erfordert. Damit verbunden ist eine starke Nebelbildung. Nebel ist in Gewächshäusern vorallem dann kein Nachteil, wenn im Bereich der Pflanzen während einer bestimmten Zeitspanne eine nebelige Atmosphäre aufgebaut werden soll.

In Klimaanlagen dagegen wird die Zu- und Abluft in Rohren dem Verbraucher zu- bzw. von ihm weggeführt. Zur Befeuchtung der Zuluft wird diese beispielsweise durch einen Luftwascher geführt, der in Strömungsrichtung nacheinander einen Gleichrichter, einen oder mehrere Düsenstöcke mit Sprühdüsen und einen Wasserabscheider aufweist. Dem Wasserabscheider sind ein Auffangbassin eine Umwälzpumpe mit Rohrleitungen und eventuell ein Wasserfilter zugeordnet. Der Gleichrichter hat den Zweck, die zu befeuchtende Luft in eine gleichförmige, annähernd laminare Strömung zu bringen, so dass im Bereich des Düsenstockes ein gleichgerichteter Luftstrom mit zerstäubten. Wasser beaufschlagt

werden kann. Wegen der vergleichsweise geringen Wasseraufnahme durch einen solchen turbulenzarmen Luftstrom sind das Auffangbassin, die Umwälzpumpe und die Anzahl Sprühdüsen entsprechend gross zu dimensionieren, was einen grossen Energieaufwand für die Umwälzpumpe bewirkt.

Die vorliegende Erfindung stellt sich daher die Aufgabe, eine Lösung aufzuzeigen, mit welcher in einem Strömungskanal ein erstes Fluid mit einem zweiten mit geringem Energieaufwand gemischt werden kann.

Als Fluid gelten hier Flüssigkeiten und Gase sowie flüssige oder feste Schwebestoffe allein oder in Verbindung mit einem gasförmigen Medium.

Die vorstehende Aufgabe wird gelöst durch die kennzeichnenden Merkmale des Anspruchs 1.

Anhand der beiliegenden schematischen Zeichnung wird die Erfindung beispielsweise erläutert. Es zeigen:
Fig. 1 einen Längsschnitt durch eine Mischeinrichtung bzw. einen Luftwäscher
Fig. 2 eine Ansicht eines in Fig. 1 eingebauten Leitapparates,
Fig. 3 einen vergrösserten Ausschnitt aus dem Leitapparat nach Fig. 2,
Fig. 4 ein zweites Ausführungsbeispiel eines Leitapparates,
Fig. 5 ein zweites Ausführungsbeispiel eines Leitapparates.

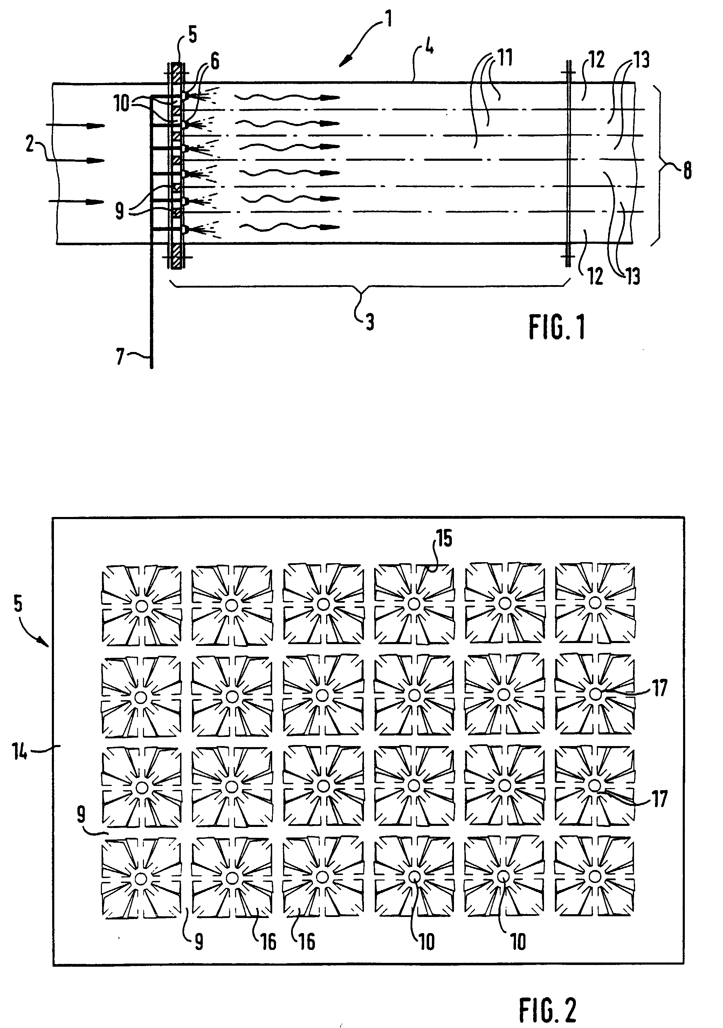

Fig. 1 zeigt einen Ausschnitt aus einem Strömungskanal 1, wie er in einem Zuluftkanal für eine Klimaanlage verwendet wird. Die durch den Strömungskanal geführte Luft 2, die ein erstes Fluid darstellt, wird wie später beschrieben in einem Mischer bzw. Luftwäscher 3 auf den gewünschten Feuchtigkeitsgehalt gebracht. Der Mischer 3 weist im wesentlichen einen Kanalabschnitt 4, einen Leitapparat 5 und Vernebelungsdüsen 6 für Wasser auf, die über eine Leitung 7 mit Druckwasser oder mit Wasser und Druckluft gespiesen sind. Die Leitung 7 ist eine Zuführleitung für ein zweites Fluid, deren Mündung(en) durch die Düsen 6 gebildet ist bzw. sind, wobei der austretende Wassernebel das zweite, dem ersten Fluid zuzuführende Medium darstellt. Der Leitapparat 5 erstreckt sich über den lichten Querschnitt 8 des Kanalabschnittes 4 und weist Stege 9 auf, die Durchlassöffnungen begrenzen. Durch die Durchlassöffnungen wird der Querschnitt 8 des Kanalabschnitts 4 in mehrere Querschnittsbereiche 12, 13 unterteilt, bzw. der in den Kanalabschnitt 4 eintretende Zuluftstrom 2 in ein Bündel von zur Strömungsrichtung angenähert parallelen Teilströmen 11 geteilt. Jedem der Teilströme 11 ist axial zur Strömungsrichtung orientiert eine Düse 6 zugeordnet, so dass der Wassernebel axial in den zugeordneten Teilstrom 11 eintritt.

Es ist aber nicht notwendig, jeder Öffnung 10 eine Düse 6 zuzuordnen. Die Düsen 6 können in beliebiger Richtung, in beliebiger Lage und Anzahl zu den Teilströmen angeordnet bzw. vorhanden sein.

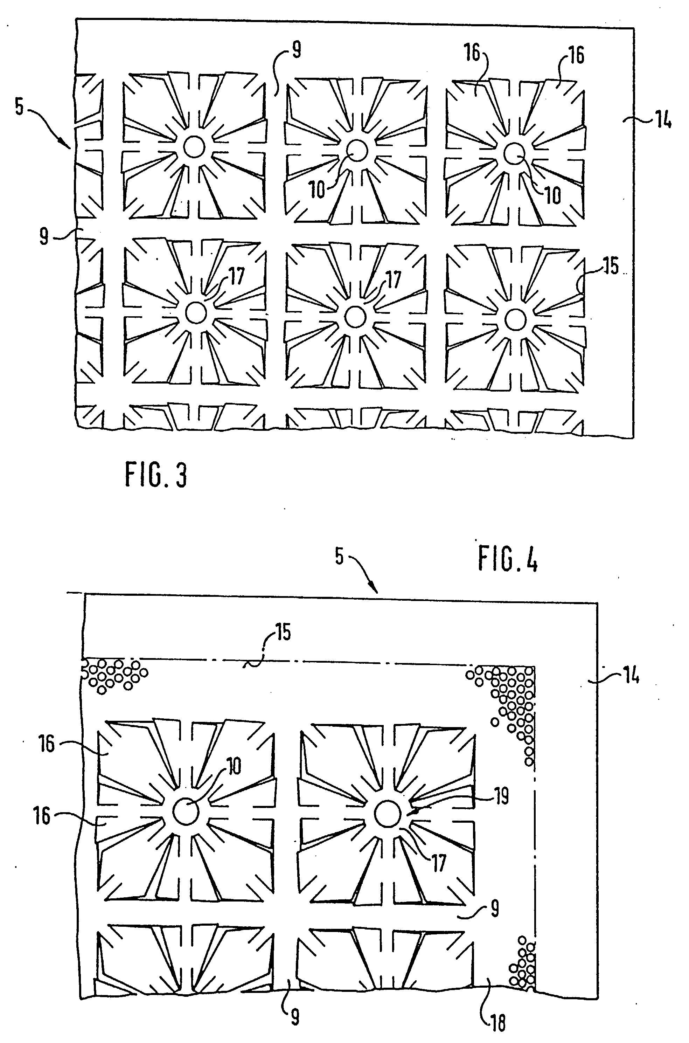

Der aus einer Blechplatte gebildete Leitapparat 5 (Fig. 2 und 3) weist einen Rand 14 auf, mit dem er an den Kanalabschnitt 4 angeflanscht wird, so dass die innere Begrenzungslinie 15 des Randes 14 nahe der Innenwand des Kanalabschnittes 4 ist. Die sich von Rand zu Rand erstreckenden Stege 9 bilden die rechteckigen Durchlassöffnungen, welche auch rund oder oval sein können, in denen Leitschaufeln 16 angeordnet sind, die dem durch die Stege 9 erzeugten Teilstrom 11 einen Drall vermitteln und darin eine Turbulenz induzieren. Die Leitschaufeln 16 können in die Öffnungen 10 eingesetzt oder aus der Blechplatte ausgeschnitten und daher einstückig mit ihr gefertigt sein. Bei einstückiger Herstellung des Leitapparates 5 werden nach dem Ausschneiden der Schaufelkontur die Leitschaufeln 16 um ihre Radialachse in eine der gewünschten Luftumlenkung entsprechende Lage gedreht, womit eine bleibende Verformung verbunden ist. In der Mitte der Durchlassöffnungen sind die Leitschaufeln 16 durch einen ringförmigen Steg 17 miteinander verbunden, der eine Öffnung 10 umschliesst und eine Fassung oder ein Befestigungslager für eine Düse 6 bildet. Hierdurch können sämtliche Düsen 6 direkt am Leitapparat 5 befestigt werden, wodurch die bei den bekannten Luftwaschern notwendigen Düsenstöcke entfallen.

Der Leitapparat 5 kann gewünschtenfalls auch kleiner als der lichte Querschnitt 8 des Kanalabschnitts 4 sein. In diesem Fall ist sein Rand 14 mittels einer radialen Stütze am Kanalabschnitt 4 befestigt.

Der Leitapparat nach Fig. 4 ist im Prinzip gleich aufgebaut wie jener nach Fig. 2 und 3 mit den Unterschieden, dass er aus einem Lochblech gefertigt ist und anschliessend an die Innenbegrenzungslinie 15 des an den Kanalabschnitt 4 anzuflaschenden Randes 14 eine zusammenhängende, gelochte Randzone 18 aufweist, die einen Kern 19 umschliesst. Die gelochte Randzone 18 erzeugt im entsprechenden Querschnittsbereich 12 (in Fig. 1) des Kanalabschnitts 4 einen Teilstrom 11 in Form eines laminaren Mantelstroms. Weiter sind in der Randzone 18 keine Düsen oder sonstigen Mündungen für die Zuführung eines zweiten Mediums in den durch die Randzone 18 erzeugten Mantelstrom gerichtet. Mit diesem Leitapparat 5 wird somit der durch die Begrenzungslinie 15 umrissene lichte Querschnitt 8 des Kanalabschnittes 4 zwar ebenfalls in Querschnittsbereiche 12, 13 unterteilt, von denen die äusseren (12) einen Mantelstrom und die inneren (13) einen Kernstrom erzeugen. Der Unterschied zum ersten Beispiel liegt somit darin, dass die Randzone 18 Mittel zur Erzeugung einer laminaren Strömung und keine Mittel für das Zuführen eines zweiten Fluids aufweist. Nur die im Kern 19 des Leitapparates 15 von den Stegen 9 gebildeten Durchlassöffnungen sind mit Leitschaufeln 16 und mit einem Ringsteg 17 als Düsenfassung versehen, die den durchtretenden Teilströmen in den Querschnittsbereichen 13 (Fig. 1) des Kanalabschnitts 4 je einen Drall bzw. eine turbulente Strömung vermitteln. Bei Verwendung dieses Leitapparates 5 entsteht im Kanalabschnitt 4 eine laminare Mantelströmung, die einen Kernstrom umgibt, welcher durch ein Bündel paralleler, verwirbelter Teilströme 11 gebildet ist. Dieser Leitapparat 5 bewirkt den vorteil, dass im Kanalabschnitt 4 im Kernstrom ein hoher Feuchtigkeitsgehalt aufgebaut werden kann, der durch den trockenen, laminaren Mantelstrom gegen die Wand des Kanalabschnittes 4 abgeschirmt wird. Dadurch wird eine Benetzung der Kanalwände weitgehend verhindert.

Beim Leitapparat 5 nach Fig. 4 können die Leitschaufeln 16 und/oder die Stege 9 auch ungelocht sein wie beim Beispiel nach Fig. 4. Weiter ist es möglich in der Randzone 18 zur Erzeugung eines laminaren Mantelstroms anstelle von Lochblech ein durchlässiges Flächengebilde mit Sieb- oder Gewebestruktur zu verwenden.

Bei den beschriebenen Ausführungsbeispielen besteht die Möglichkeit, das Profil der Strömungsgeschwindigkeit des Luftstromes im Kanalabschnitt 4 zu verändern, indem in den verschiedenen Durchlassöffnungen der Anstellwinkel der Leitschaufeln 16 unterschiedlich eingestellt wird.

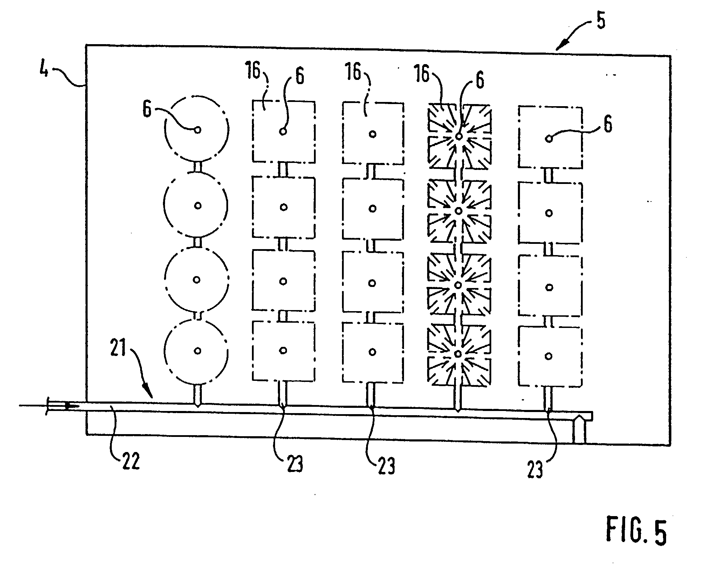

Beim Ausführungsbeispiel nach Fig. 5 weist der Leitapparat 5 einen an sich bekannten Düsenstock 21 mit einem horizontalen, am Kanalabschnitt 4 befestigten Druckwasserrohr 22 auf, von dem Düsenrohre 23 vertikal nach oben abzweigen. An den Düsenrohren 23 sind in regelmässigem Abstand die Sprühdüsen 6 für die Zugabe von Wasser als zweitem Fluid angeordnet. Axial auf die Düsen aufgesteckt sind die Leitschaufeln 16, die in Strömungsrichtung gesehen einen viereckigen oder (wie in Fig. 5 links angedeutet) einen runden Querschnittsbereich begrenzen bzw. abdecken.

## Patentansprüche

1. Luftwäscher zur Befeuchtung von Luft in Klimaanlagen odgl., umfassend einen Strömungskanal (1) mit einem Kanalabschnitt (4), welcher eine Strömungsrichtung festlegt, einen senkrecht zum Kanalabschnitt (4) verlaufend angeordneten Leitapparat (5) sowie Vernebelungsdüsen (6) zum Zuführen eines Fluides, insbesondere Wasser, dadurch gekennzeichnet, dass der Leitapparat (5) mehrere nebeneinander und übereinander angeordnete Durchlassöffnungen mit feststehenden Leitschaufeln (16) aufweist, wobei die Leitschaufeln (16) derart angeordnet sind, dass auf die durchströmende Luft ein Drall bewirkt wird, um im Kanalabschnitt (4) ein Bündel verwirbelter Teilströme (11) auszubilden, dass die Durchlassöffnungen in ihren jeweiligen Zentren eine durchgehende, in Strömungsrichtung verlaufende Öffnung (10) aufweisen, in welcher eine in Strömungsrichtung über den Leitapparat (5) vorstehende Vernebelungsdüse (6) angeordnet ist, und dass die Vernebelungsdüse (6) von keiner, in Strömungsrichtung über die Vernebelungsdüse (6) vorstehenden, zusätzlichen Leitvorrichtung umgeben ist.

2. Luftwäscher nach Anspruch 1, dadurch gekennzeichnet, dass die Vernebelungsdüsen (6) radial und/oder axial in einen jeweiligen Querschnittsbereich eines Teilstromes (11) gerichtet sind.

3. Luftwäscher nach Anspruch 1 oder 2, dadurch gekennzeichnet, dass der Kanalabschnitt (4) nach dem Leitapparat (5) im wesentlichen gerade ist.

4. Luftwäscher nach einem der Ansprüche 1 bis 3, dadurch gekennzeichnet, dass der Leitapparat (5) den Querschnitt (8) des Kanalabschnitts (4) in mehrere Querschnittsbereiche (12, 13) unterteilt und dass der Leitapparat (5) mindestens in einem Teil der Querschnittsbereiche (12, 13) Leitschaufeln (16) zur Erzeugung einer turbulenten Strömung aufweist.

5. Luftwäscher nach Anspruch 4, dadurch gekennzeichnet, dass der Leitapparat (5) eine Randzone (18) und einen Kern (19) aufweist, die die Querschnittsbereiche (12, 13) des Kanalabschnitts (4) in einen Rand- und in einen Kernbereich (12 bzw. 13) unterteilen und dass der Leitapparat (5) im Bereich der Randzone (18) Mittel aufweist, um dem durch die Randzone (18) strömenden ersten Fluid eine laminare Strömung zu induzieren und dass die Leitschaufeln (16) des Leitapparates (5) zur Erzeugung einer turbulenten Strömung im Kern (19) angeordent sind.

6. Luftwäscher nach Anspruch 5, dadurch gekennzeichnet, dass der Leitapparat (5) den Kernbereich des Querschnitts (8) des Kanalabschnitts (4) in mehrere Querschnittsbereiche (13) unterteilt und im Kern (19) jede Durchlassöffnung mit Leitschaufeln (16) zur Erzeugung einer turbulenten Strömung in den Querschnittsbereichen (13) im ersten Fluid versehen ist.

7. Luftwäscher nach einem der Ansprüche 1 bis 6, dadurch gekennzeichnet, dass der Leitapparat (5) einen einbaubaren Körper aufweist, der mehrere zur Strömungsachse parallele Durchlassöffnungen für den Durchtritt des ersten Fluids aufweist, und dass in mindestens einer der Durchlassöffnungen Leitfschaufeln (16) zur Erzeugung einer Turbulenz im durchströmenden ersten Fluid angeordnet sind, die vorzugsweise fest mit dem Körper verbunden sind.

8. Luftwäscher nach einem der Ansprüche 1 bis 6 bzw. 7, dadurch gekennzeichnet, dass der Leitapparat (5) bzw. der Körper eine ein oder mehrere Durchlassöffnungen aufweisende Platte, vorzugsweise aus Blech ist, wobei bei mehreren Durchlassöffnungen die Durchlassöffnungen durch stegartige Elemente (9) voneinander getrennt sind.

9. Luftwäscher nach Anspruch 8, dadurch gekennzeichnet, dass in den Durchlassöffnungen vorhandene Leitschaufeln (16) einstückig mit der Platte gefertigt sind.

10. Luftwäscher nach Anspruch 8 oder 9, dadurch gekennzeichnet, dass die Platte nach Art eines Lochblechs gelocht ist, wobei Löcher in der Randzone (18) die Mittel zur Erzeugung einer laminaren Strömung bilden.

11. Luftwäscher nach einem der Ansprüche 1 bis 10, dadurch gekennzeichnet, dass die Leitschaufeln (16) in den Durchlassöffnungen an ihren einander zugewandten Enden durch ein mit ihnen einstückig geformtes Ringelement (17) verbunden sind, welches ein Befestigungslager für eine Vernebelungsdüse (6) bildet.

12. Luftwäscher nach einem der Ansprüche 5 bis 11, dadurch gekennzeichnet, dass die Mittel zur Erzeugung einer laminaren Strömung ein sich über den zugeordneten Querschnittsbereich (12) erstreckendes Flächengebilde mit Lochblech-, Gewebe- oder Siebstruktur sind.

13. Luftwäscher nach einem der Ansprüche 1 bis 12, gekennzeichnet durch ein oder mehrere mit Vernebelungsdüsen (6) besetzte Druckwasserrohre (22, 23), wobei auf den Vernebelungsdüsen (6) die Leitschaufeln (16) fest aufgesetzt sind.

## Claims

1. An air washer for humidifying air in air conditioning systems or the like, comprising a flow channel (1) with a channel portion (4) which establishes a direction of flow, a guiding apparatus (5) disposed to extend at right-angles to the channel portion (4) and with atomising jets (6) for supplying a fluid, in particular water, characterised in that the guiding apparatus (5) comprises a plurality of adjacently disposed and superposed ports with fixed guide blades (16), the guide blades (16) being so disposed that a twist is imposed upon the air flowing through them in order to form a bundle of turbulent partial flows (11) in the channel portion (4) and in that in their respective centres the ports comprise a continuous aperture (10) extending in the direction of flow and in which there is an atomising jet (6) projecting beyond the guide member (5) in the direction of flow and in that the atomising jet (6) is surrounded by no additional guide means projecting beyond the atomising jet (6) in the direction of flow.

2. An air washer according to claim 1, characterised in that the atomising jets (6) are directed radially and/or axially into a respective area of the cross-section of a partial flow (11).

3. An air washer according to claim 1 or 2, characterised in that the channel portion (4) following the guiding apparatus (5) is substantially straight.

4. An air washer according to one of claims 1 to 3, characterised in that the guiding apparatus (5) sub-divides the cross-section (8) of the channel portion (4) into a plurality of cross-sectional zones (12, 13) and in that the guiding apparatus (5) has in at least one part of the cross-sectional zones (12, 13) guide blades (16) for generating a turbulent flow.

5. An air washer according to claim 4, characterised in that the guiding apparatus (5) comprises a marginal zone (18) and a core (19) which sub-divides the cross-sectional zones (12, 13) of the channel portion (4) into a marginal zone and core zone (12, 13 respectively) and in that the guiding apparatus (5) has in the region ofthe marginal zone (18) means of inducing a laminar flow on the first fluid flowing through the marginal zone (18) and in that the guide blades (16) ofthe guiding apparatus (5) are disposed in the core (19) to generate a turbulent flow.

6. An air washer according to claim 5, characterised in that the guiding apparatus (5) sub-divides the core zone of the cross-section (8) of the channel portion (4) into a plurality of cross-sectional zones (13) and in that each port in the core (19) is provided with guide blades (16) to create a turbulent flow in the cross-sectional zones (13) in the first fluid.

7. An air washer according to one of claims 1 to 6, characterised in that the guiding apparatus (5) comprises an insertable member comprising a plurality of ports parallel with the axis of flow and through which the first fluid can pass and in that in at least one of the ports there are guide blades (16) to create turbulence in the through-flowing first fluid and which are preferably rigidly connected to the member.

8. An air washer according to one of claims 1 to 6 or 7, characterised in that the guiding apparatus (5) or member is a plate comprising one or more ports and preferably consisting of sheet metal, whereby, if there are several ports, the ports are isolated from each other by web-like elements (9).

9. An air washer according to claim 8, characterised in that guide blades (16) provided in the ports are produced in one piece with the plate.

10. An air washer according to claim 8 or 9, characterised in that the plate is perforated in the manner of a perforated plate, holes in the marginal zone (18) constituting the means of generating a laminar flow.

11. An air washer according to one of claims 1 to 10, characterised in that the guide blades (16) in the ports are at their mutually facing ends connected by a ring element (17) integrally formed with them and which constitutes a fixing mounting for an atomising jet (6).

12. An air washer according to one of claims 5 to 11, characterised in that the means of generating a laminar flow are a flat structure extending over the associated cross-sectional zone (12) and taking the form of a perforated plate, an interwoven structure or mesh.

13. An air washer according to one of claims 1 to 12, characterised by one or a plurality of pressurised water pipes (22, 23) provided with atomising jets (6), the guide blades (16) being rigidly mounted on the atomising jets (6).

## Revendications

1. Dispositif de purification de l'air pour l'humidification de l'air dans des installations de climatisation ou similaires, comprenant un canal d'écoulement (1) avec un tronçon (4) qui définit la direction d'écoulement, un appareillage de déflection (5) ainsi que des buses de pulvérisation de brouillard (6) destinées à délivrer un fluide, notamment de l'eau, **caractérisé** en ce que l'appareillage de guidage (5) présente plusieurs ouvertures de passage disposées côte à côte et les unes au-dessus des autres, comprenant des ailettes directrices (16) fixes, ces ailettes directrices (16) étant disposées de façon à produire un tourbillon dans l'air s'écoulant au travers en vue d'engendrer dans le tronçon de canal (4) un faisceau d'écoulements partiels tourbillonnaires (11), en ce que les ouvertures de passage présentent chacune en son centre respectif, un orifice (10) traversant, s'étendant dans la direction de l'écoulement et dans lequel est disposée une buse de vaporisation de brouillard (6) faisant saillie au-delà de l'appareillage de guidage (5) dans cette direction, et en ce que chaque buse de vaporisation de brouillard (6) n'est entourée d'aucun dispositif de guidage supplémentaire faisant saillie au-delà d'elle.

2. Dispositif de purification de l'air selon la revendication 1, **caractérisé** en ce que les buses de vaporisation de brouillard (6) sont orientées radialement et/ou axialement dans une zone de section transversale respective d'un écoulement partiel (11).

3. Dispositif de purification de l'air selon la revendication 1 ou 2, **caractérisé** en ce que le tronçon de canal (4), après l'appareillage de guidage (5), est sensiblement rectiligne.

4. Dispositif de purification de l'air selon l'une des revendications 1 à 3, **caractérisé** en ce que l'appareillage de guidage (5) subdivise la section transversale (8) du tronçon de canal (4) en plusieurs zones (12, 13), et en ce que cet appareillage (5) comporte, au moins dans une partie des zones de la section transversale (12, 13), des ailettes directrices (16) destinées à engendrer un écoulement turbulent.

5. Dispositif de purification de l'air selon la revendication 4, **caractérisé** en ce que l'appareillage de guidage (5) présente une zone de bordure (18) et une partie centrale (19) qui subdivisent les zones de section transversale (12, 13) du tronçon de canal (4) en une zone de bordure et une zone centrale (12 et respèctivement 13), en ce que cet appareillage (5) comporte, dans la région de la zone de bordure (18), des moyens pour induire dans le premier fluide s'écoulant au travers de la zone de bordure (18), un écoulement laminaire, et en ce que les ailettes directrices (16) de l'appareillage (5) sont disposées dans la partie centrale (19) en vue d'engendrer un écoulement turbulent.

6. Dispositif de purification de l'air selon la revendication 5, **caractérisé** en ce que l'appareillage de guidage (5) subdivise la zone centrale de la section transversale (8) du tronçon de canal (4) en plusieurs zones (13), la partie centrale (19) de chaque ouverture de passage étant dotée d'ailettes directrices (16) en vue d'engendrer un écoulement turbulent dans le premier fluide dans ces zones de section transversale (13).

7. Dispositif de purification de l'air selon l'une des revendications 1 à 6, **caractérisé** en ce que l'appareillage de guidage (5) comprend un corps intégrable qui présente plusieurs ouvertures de passage parallèles à l'axe de l'écoulement, destinées au passage du premier fluide, et en ce que, dans l'une au moins de ces ouvertures de passage sont disposées des ailettes directrices (16), destinées à engendrer des turbulences dans le premier fluide s'écoulant au travers, et qui sont de préférence reliées de manière fixe au corps.

8. Dispositif de purification de l'air selon l'une des revendications 1 à 6 ou 7, **caractérisé** en ce que l'appareillage de guidage (5) ou le corps est constitué d'une plaque, de préférence une tôle, présentant une ou plusieurs ouvertures de passage, ces ouvertures de passage étant séparées les unes des autres par des éléments en forme de nervures (9), dans le cas de plusieurs ouvertures.

9. Dispositif de purification de l'air selon la revendication 8, **caractérisé** en ce que des ailettes directrices (16) se trouvant dans les ouvertures de passage sont réalisées d'un seul tenant avec la plaque.

10. Dispositif de purification de l'air selon la revendication 8 ou 9, **caractérisé** en ce que la plaque est trouée à la manière d'une tôle perforée, les perforations dans la zone de bordure (18) formant les moyens destinés à engendrer un écoulement laminaire.

11. Dispositif de purification de l'air selon l'une des revendications 1 à 10, **caractérisé** en ce que les ailettes directrices (16) dans les ouvertures de passage sont reliées, à leurs extrémités dirigées les unes vers les autres, par un élément annulaire (17), qui est réalisé d'un seul tenant avec ces ailettes directrices et qui forme un support de fixation pour une buse de vaporisation de brouillard (6).

12. Dispositif de purification de l'air selon l'une des revendications 5 à 11, **caractérisé** en ce que les moyens destinés à engendrer un écoulement laminaire sont constitués par un élément plan à structure de tôle perforée, à structure tissée ou à structure de tamis, qui s'étend dans la zone de section transversale (12) associée.

13. Dispositif de purification de l'air selon l'une des revendications 1 à 12, **caractérisé** par un ou plusieurs tubes d'eau sous pression (22, 23), équipés de buses de pulvérisation de brouillard (6), les ailettes directrices (16) étant placées de manière fixe sur ces buses de pulvérisation (6).
